# EUROPÄISCHE PATENTSCHRIFT

(11) **EP 2 460 672 B1**
(45) Veröffentlichungstag und Bekanntmachung des Hinweises auf die Patenterteilung: **04.06.2014**
(21) Anmeldenummer: 11185916.1
(22) Anmeldetag: 20.10.2011
(51) Int. Cl.: B60C 11/03, B60C 11/12

(54) **Fahrzeugluftreifen**
Pneumatic tyre for a vehicle
Pneu de véhicule

(30) Priorität: 01.12.2010 DE 102010060945
(43) Veröffentlichungstag der Anmeldung: 06.06.2012
(73) Patentinhaber: Continental Reifen Deutschland GmbH, 30165 Hannover (DE)
(72) Erfinder: Diensthuber, Franz, 30559 Hannover (DE); Vermehr, Ulrich, 30163 Hannover (DE)
(74) Vertreter: Finger, Karsten

(56) Entgegenhaltungen:
- EP-A1- 2 253 485
- WO-A1-97/32741
- WO-A1-02/068222
- GB-A- 2 053 817
- JP-A- 2003 080 907

## Beschreibung

Die Erfindung betrifft einen Fahrzeugluftreifen, insbesondere für den Einsatz unter winterlichen Fahrbedingungen, mit einem Laufstreifen mit schulterseitigen durch Quernuten voneinander getrennte Schulterblöcke aufweisenden Profilblockreihen, welche jeweils durch eine in Umfangsrichtung umlaufende Umfangsrille von einem zentralen Laufstreifenbereich getrennt sind, in welchem Profilpositive von Diagonalrillen gebildet sind, wobei die Schulterblöcke und die Profilpositive im zentralen Laufstreifenbereich jeweils mit einer Anzahl von zumindest im Wesentlichen in Laufstreifenquerrichtung verlaufenden Einschnitten mit einer Breite von 0,4 mm bis 0,6 mm versehen sind, wobei der zentrale Laufstreifenbereich zwischen 45 % und 55 % der Breite des Laufstreifens einnimmt und im zentralen Laufstreifenbereich ausschließlich gerade verlaufende Einschnitte angeordnet sind, und wobei die Einschnitte in den Schulterblöcken zumindest abschnittsweise einen in Draufsicht zickzack- oder wellenförmigen Verlauf aufweisen.

Ein derartiger Fahrzeugluftreifen ist aus der JP 2003 080907 A bekannt. Bei einer der offenbarten Ausführungsvarianten verläuft im zentralen Laufstreifenbereich entlang des Reifenäquators eine Umfangsrille, an welche beidseitig Profilpositive anschließen, in welchen gerade Einschnitte verlaufen, die sich exakt in axialer Richtung erstrecken. In den Schulterblöcken, die jeweils eine relativ große Umfangserstreckung aufweisen, verlaufen jeweils mehrere Einschnitte, die zumindest abschnittsweise in Draufsicht einen zick-zack- oder wellenförmigen Verlauf aufweisen. Bei dem aus der WO 97/32741 A1 bekannten Laufstreifen sind in den Profilpositiven im zentralen Laufstreifenbereich in axialer Richtung und gerade verlaufende Einschnitte angeordnet, in den Schutterblockreihen wellen- oder zick-zack-förmig verlaufende Einschnitte, die ebenfalls in axialer Richtung orientiert sind.

Ein weiterer Fahrzeugluftreifen ist beispielsweise aus der DE 10 2005 042 569 A1 bekannt. Der Laufstreifen ist durch Quernuten, Umfangsrillen und Diagonalrillen in Profilpositive gegliedert, welche jeweils mit einer Vielzahl von Einschnitten versehen sind. Ein Teil der Einschnitte weist eine Breite von bis zu 0,8 mm auf, ein Teil der Einschnitte sind sogenannte Mikroeinschnitte, die eine Breite zwischen 0,1 mm und 0,3 mm aufweisen. Durch die Kombination dieser Einschnitte sollen die Griffeigenschaften auf winterlichen Fahrbahnen, insbesondere auf Schnee und Eis, verbessert werden ohne dass andere Eigenschaften, wie beispielsweise das Brems- und Traktionsverhalten auf trockenen und nassen Fahrbahnen, beeinträchtigt werden. Sämtliche Einschnitte, sowohl die breiteren Einschnitte als auch die schmalen Mikroeinschnitte, sind in Draufsicht zumindest abschnittsweise zickzack- oder wellenförmig verlaufende Einschnitte.

Es ist vor allem in Laufstreifen von PKW-Winterreifen üblich, Profilpositive jeweils mit einer Anzahl von parallel verlaufenden, geraden, wellenförmigen, zickzackförmigen oder stufenförmigen Einschnitten zu versehen. Laufstreifen mit ausschließlich wellenförmig verlaufenden Einschnitten sind beispielsweise aus der EP-B 0 715 972, der DE-A-197 05 156 und der EP-B-0 729 854 bekannt. Die Einschnitte in den Profil positiven des Laufstreifens sind für einen guten Wintergriff, insbesondere auf schneeigen Fahrbahnen, unerlässlich. Die Einschnitte öffnen sich unter der Wirkung von Umfangskräften im Latschdurchgang und bilden dadurch Griffkanten, die sich im komprimierten Schnee abstützen können und so eine gute Kraftübertragung ermöglichen. Die Einschnitte bewirken jedoch auch eine Gliederung der Profilpositive in kleinere Profilpositivelemente, wodurch deren Steifigkeit in Umfangsrichtung und in Querrichtung reduziert wird. Durch eine geringere Profilsteifigkeit baut der Reifen eine kleinere Schräglaufsteifigkeit beim Fahren auf trockenen Straßen auf, sodass unter solchen Fahrbedingungen das Handlingpotential des Reifens etwas eingeschränkt ist.

Der Erfindung liegt die Aufgabe zugrunde, diesen Zielkonflikt zwischen den Handlingeigenschaften des Reifens auf trockener Straße und der erwünschten Performance auf schneeigem Untergrund zu beseitigen.

Gelöst wird die gestellte Aufgabe erfindungsgemäß dadurch, dass die Schulterblöcke jeweils durch eine parallel zu den Quernuten verlaufende Querrille, welche eine geringere Tiefe als die Quernuten aufweist und in die Umfangrille (1) einmündet, in Schulterblockteile zweigeteilt sind, wobei in jedem Schulterblockteil ein Einschnitt oder zwei Einschnitte parallel zur Querrille verlaufend angeordnet ist bzw. sind.

Ein erfindungsgemäß ausgeführter Laufstreifen ist durch die Einschnitte funktional geteilt, da im zentralen Bereich und in den beiden Schulterbereichen geometrisch unterschiedliche und auch unterschiedliche Effekte bewirkende Einschnitte angeordnet sind. Der zentrale Profilbereich ist zur optimalen Kraftübertragung auf schneeigem Untergrund mit geraden Einschnitten versehen, welche sich beim Wirken von Umfangskräften sehr gut öffnen können und dadurch ein großes Volumen zum Auffüllen mit Schnee zur Verfügung stellen. Dadurch wird die Schnee-Schnee-Reibung verstärkt und das gesamte Griffpotential des Reifens auf schneeigem Untergrund erhöht. Die Schulterblöcke übernehmen die Aufgabe, den Laufstreifen bei Querkräften zu stabilisieren, indem die wellenförmigen Abschnitte der Einschnitte unter der Wirkung von Querkräften eine gegenseitige Abstützung der Profilblockelemente ermöglichen. *Durch die Zweiteilung der Schulterblöcke mittels je einer Querrille, die eine geringere Tiefe aufweist als die Quernuten zwischen den Schulterblöcken, wird insgesamt eine unerwünscht hohe Umfangssteifigkeit der Schulterblöcke vermieden.*

Bei einer bevorzugten Ausführungsform der Erfindung weisen die Einschnitte in den Schulterblöcken jeweils einen wellen- oder zickzackförmigen Abschnitt auf, welcher zwischen zwei gerade verlaufenden Einschnittabschnitten angeordnet ist. Durch die geraden Abschnitte sind auch die Einschnitte in den Schülterblöcken in der Lage, einen Beitrag zum Griffpotential des Laufstreifens auf Schnee zu leisten.

Besonders wirkungsvoll sind die geraden Einschnitte im zentralen Bereich des Laufstreifens dann, wenn sie zumindest im Wesentlichen in der Querrichtung des Laufstreifens verlaufen. Bevorzugt schließen diese Einschnitte einen Winkel von 90° bis 110° mit der Umfangsrichtung des Laufstreifens ein und sind, falls der Winkel 90° übersteigt, zu den Diagonalrillen gegensinnig geneigt.

*Die Querrillen nehmen* Einfluss auf die Umfangssteifigkeit der Profilblockelemente, die durch die Einschnitte gebildet werden. Für eine zumindest im Wesentlichen gleich hohe Umfangssteifigkeit dieser Profilblockelemente in einem Profilblock wird eine besondere Positionierung der Einschnitte in den Schulterblockteilen vorgenommen. In Schulterblockteilen mit einem Einschnitt wird der Einschnitt derart angeordnet, dass sein Abstand zur Schulterblockkante, welche eine Quernut begrenzt, größer ist, als sein Abstand zu jener Kante, welche die Querrille begrenzt. In Schulterblockteilen mit zwei Einschnitten weist jeweils jener Einschnitt, welcher der Quernut benachbart verläuft, zu dieser einen Abstand auf, welcher größer ist als der Abstand zwischen dem zweiten Einschnitt und der Querrille.

Weitere Merkmale, Vorteile und Einzelheiten der Erfindung werden nun anhand der Zeichnung, die ein Ausführungsbeispiel darstellt, näher beschrieben. Die einzige Figur,

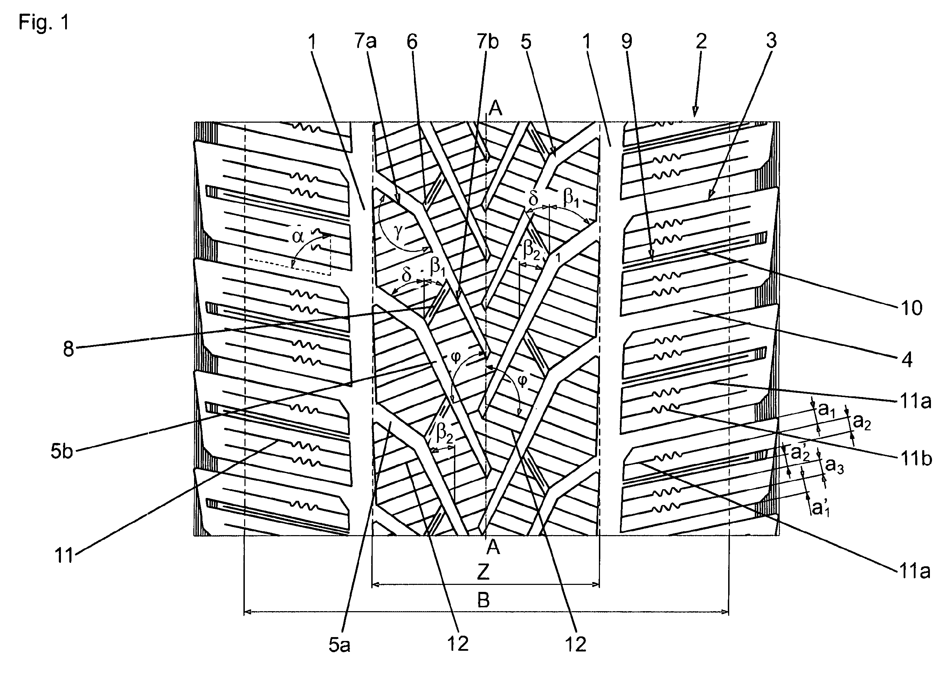

Fig. 1 zeigt dabei eine Draufsicht auf einen Abschnitt der Abwicklung eines Laufstreifens eines Fahrzeugluftreifens mit einer Ausführungsvariante der Erfindung.

Der in der Figur dargestellte Laufstreifen ist für einen Fahrzeugluftreifen für Personenkraftwagen vorgesehen und für einen Einsatz unter winterlichen Fahrbedingungen besonders geeignet. Mit A-A ist der Reifenäquator, mit B die Breite des Boden berührenden Teils des Laufstreifens (unter Nenndruck und Nennlast gemäß E.T.R.T.O Standards) bezeichnet. Der Laufstreifen weist ein laufrichtungsgebunden ausgeführtes Laufstreifenprofil mit in den beiden Laufstreifenhälften übereinstimmend ausgeführten Profilstrukturen auf, wobei die in der einen Laufstreifenhälfte vorgesehenen Profilstrukturen gegenüber jenen, die in der anderen Laufstreifenhälfte vorgesehen sind, in Umfangsrichtung geringfügig versetzt sind. Das Laufstreifenprofil weist einen zentralen Profilbereich Z auf, auf dessen Ausgestaltung noch näher eingegangen wird und welcher zwischen 45 % und 55 % der Laufstreifenbreite B einnimmt. Der zentrale Bereich Z ist jeweils durch eine breite, in Umfangsrichtung umlaufende Umfangsrille 1 von je einer Schulterblockreihe 2 getrennt. Die Profilblöcke 3 in jeder Schulterblockreihe 2 sind in Umfangsrichtung voneinander durch Quernuten 4 getrennt, welche bei der gezeigten Ausführungsform gerade verlaufen und mit der Umfangsrichtung einen Winkel a einschließen, welcher insbesondere zwischen 65° und 85° gewählt wird, wobei in Folge der laufrichtungsgebundenen Ausführung des Laufstreifens die Quernuten 4 in der einen Schulterblockreihe 2 gegenüber den Quernuten 4 in der anderen Schulterblockreihe 2 gegensinnig geneigt sind. Die Neigung ist ferner derart, dass die laufstreifeninnenseitig gelegenen Enden der Quernuten 4 beim Abrollen des Reifens zuerst in die Kontaktfläche mit dem Untergrund einlaufen. Im zentralen Bereich Z des Laufstreifens sind als Hauptrillen Diagonalrillen 5 vorgesehen. Jede Diagonalrille 5 verläuft etwa in Verlängerung einer Quernut 4 aus einer Schulterblockreihe 2 in Richtung Reifenäquator A-A und geringfügig über den Reifenäquator A-A hinaus. Die in der einen Laufstreifenhälfte verlaufenden Diagonalrillen 5 sind daher gegenüber jenen, die in der anderen Laufstreifenhälfte verlaufen, analog zu den Quernuten 4 gegensinnig geneigt, sodass sich über die Breite B insgesamt eine gepfeilte Anordnung der Querrillen 4 und der Diagonalrillen 5 ergibt.

Jede Diagonalrille 5 weist zwei unter einem stumpfen Winkel γ zueinander verlaufende Rillenabschnitte 5a, 5b auf, wobei γ in der Größenordnung von 140° bis 160° gewählt wird. Die an die Umfangsrillen 1 anschließenden Rillenabschnitte 5a verlaufen unter einem Winkel β₁ zur Umfangsrichtung, welcher zwischen 45° und 65° beträgt, die geringfügig über den Reifenäquator A-A verlaufenden Rillenabschnitte 5b schließen einen spitzen Winkel β₂, welcher kleiner ist als β₁ und in der Größenordnung von 20° bis 40° gewählt wird, mit der Umfangsrichtung bzw. dem Reifenäquator A-A ein. An ihren laufstreifeninnenseitigen Ende weisen die Diagonalrillen 5 ihre geringste Breite auf, wobei ihre Breite von diesen Enden ausgehend bis zur jeweiligen Umfangsrille 1 kontinuierlich größer wird. Zusätzliche Rillen 6 gliedern den zentralen Bereich in Profilblöcke 7a und profilblockartige Profilelemente 7b. Die zusätzlichen Rillen 6 verbinden jeweils zwei einander benachbart verlaufende Diagonalrillen 5 und verlaufen jeweils vom vorspringenden Knick einer Diagonalrille 5 zum Rillenabschnitt 5b der benachbarten Diagonalrille 5 unter einem Winkel δ von 20° bis 40° und gegensinnig zu den Diagonalrillen 5. Die Rillen 6 sind schmäler als die Diagonalrillen 5, ihre Tiefe ist geringer als die Tiefe der Umfangsrillen 1 bzw. der Diagonalrillen 5. Am Rillengrund der Rillen 6 kann ein schmaler Einschnitt 8 vorgesehen sein, welcher in einer Breite von 0,4 mm bis 1,0 mm ausgeführt ist und bis auf die vorgesehene Profiltiefe ― dies ist die Tiefe der Umfangsrillen 1 ― reichen kann.

Die schulterseitig angeordneten Profilblöcke 3 sind in ihrem mittleren Bereich durch in konstanter Breite ausgeführte zusätzliche Querrillen 9 zweigeteilt, welche parallel zu den Quernuten 4 verlaufen und in die Umfangrillen 1 einmünden. Auch die zusätzlichen Querrillen 9 weisen eine geringere Tiefe auf als die Umfangsrillen 1 und können mittig mit einem schmalen, etwa 0,4 mm bis 0,6 mm breiten Einschnitt 10 versehen sein, welcher sich jeweils bevorzugt über die gesamte Länge der Querrille 9 erstreckt und eine Tiefe von 1 mm bis 3 mm aufweist.

Sämtliche Profilpositive sind jeweils mit einer Anzahl von Einschnitten 11, 12 versehen, deren Breite zwischen 0,4 mm und 0,6 mm beträgt. In den Schulterblöcken 3 ist zumindest je ein Einschnitt 11 im Schulterblockteil zwischen der zusätzlichen Querrille 9 und der Quernut 4 vorgesehen, je nach Umfangslänge der Schulterblöcke 3 sind in den Schulterblockteilen auch zwei Einschnitte 11 vorgesehen. Die Einschnitte 11 erstrecken sich parallel zu den Quernuten 4 und weisen zwei in Draufsicht gerade verlaufende Einschnittabschnitte 11a und einen zwischen diesen verlaufenden mittleren Abschnitt 11b auf, welcher in Draufsicht eine Wellen- bzw. Zickzackform aufweist. Die wellenförmigen Abschnitte 11b tragen dazu bei, dass sich die Profilblöcke 3 in den Schulterblockreihen 2 bei Querkräften versteifen können.

In Schulterblockteilen mit einem Einschnitt 11 wird dieser derart positioniert, dass sein Abstand a₁ zu der die Quernut 4 begrenzenden Blockkante größer ist als sein Abstand a₂ zu der die Querrille 9 begrenzenden Kante. Sind zwei Einschnitte 11 in einem Schulterblockteil vorgesehen, so weist der der Quernut 4 benachbart verlaufende Einschnitt 11 einen Abstand a₁' zu der die Quernut 4 begrenzenden Blockkante auf, welcher größer ist als der Abstand a₂' zwischen der die Querrille 9 begrenzenden Kante und dem dieser benachbart verlaufenden Einschnitt 11. Der Abstand a₃ zwischen den beiden Einschnitten kann mit dem Abstand a₁' oder dem Abstand a₂' übereinstimmen oder geringfügig größer oder kleiner als a₁' oder a₂' sein. Die Unterschiede zwischen den Abständen a₁ und a₂ bzw. a₁' und a₂' sind gering, insbesondere zwischen 0,1 mm und 0,5 mm. Die unterschiedlichen Abstände a₁, a₂ und a₁', a₂' bewirken eine gleichmäßige Umfangssteifigkeit der von den Einschnitten 11 im Profilblock 3 gebildeten Profilblockelemente und derart einen "Ausgleich" des Einflusses der seichteren Querrille 9 auf die Umfangssteifigkeit.

Im zentralen Bereich Z des Laufstreifens sind ausschließlich in Draufsicht gerade verlaufende Einschnitte 12 angeordnet. Die Einschnitte 12 können in Laufstreifenquerrichtung oder zu dieser geringfügig geneigt verlaufen. Insbesondere sind die auf der eine Seite des Reifenäquators A-A verlaufenden Einschnitte 12 gegenüber jenen, die an der anderen Seite des Reifenäquators A-A verlaufen, gegensinnig geneigt und verlaufen auch jeweils gegensinnig zu den Diagonalrillen 5. Der Neigungswinkel ϕ der Einschnitte 12 zur Umfangsrichtung (Reifenäquator A-A) beträgt zwischen 90° und 120°. Beim Reifenäquator A-A verlaufen einige Einschnitte 12 aus der einen Laufstreifenhälfte geringfügig über den Reifenäquator A-A hinaus und enden bei der nächsten Diagonalrille 5. Pro Profilblock 7a bzw. blockartigem Profilelement 7b sind zwischen fünf und sieben Einschnitte 12 vorgesehen, deren gegenseitiger Abstand etwa 5 mm bis 6,5 mm beträgt. Die geraden und zumindest im Wesentlichen in Laufstreifenrichtung verlaufenden Einschnitte 12 im zentralen Bereich Z des Laufstreifens unterstützen eine möglichst optimale Kraftübertragung auf Schnee. Beim Wirken von Umfangskräften können sich diese geraden Einschnitte 12 sehr gut öffnen und mit Schnee befüllen, sodass die derart verstärkte Schnee-Schnee-Reibung das gesamte Griffpotential des Laufstreifens bzw. Reifens auf schneeigem Untergrund deutlich erhöht.

Die Einschnitte 11, 12 können ferner in bekannter Weise Abschnitte mit unterschiedlichen Tiefen aufweisen.

Die Erfindung ist auf das dargestellte Ausführungsbeispiel nicht eingeschränkt. Erfindungsgemäß mit Einschnitten versehene Laufstreifen können auch nicht laufrichtungsgebunden ausgeführt sein.

### Bezugszeichenliste

- 1: Umfangsrille
- 2: Schulterblockreihe
- 3: Profilblock
- 4: Quernuten
- 5: Diagonalrille
- 5a: Rillenabschnitt
- 5b: Rillenabschnitt
- 6: zusätzliche Rille
- 7a: Profilblock
- 7b: blockartiges Profilpositiv
- 8: Einschnitt
- 9: zusätzliche Querrille
- 10: Einschnitt
- 11: Einschnitt
- 1la: Einschnittabschnitt
- 11b: Einschnittabschnitt
- 12: Einschnitt
- a₁: Abstand
- a₂: Abstand
- a₁': Abstand
- a₂': Abstand
- a₃: Abstand
- α: Winkel
- β₁: Winkel
- β₂: Winkel
- γ: Winkel
- δ: Winkel
- ϕ: Winkel
- A-A: Reifenäquator
- B: Breite
- Z: zentraler Bereich

## Patentansprüche

1. Fahrzeugluftreifen, insbesondere für den Einsatz unter winterlichen Fahrbedingungen, mit einem Laufstreifen mit schulterseitigen durch Quernuten (4) voneinander getrennte Schulterblöcke (3) aufweisenden Profilblockreihen (2), welche jeweils durch eine in Umfangsrichtung umlaufende Umfangsrille (1) von einem zentralen Laufstreifenbereich (Z) getrennt sind, in welchem Profilpositive (7a, 7b) von Diagonalrillen (5) gebildet sind, wobei die Schulterblöcke (3) und die Profilpositive (7a, 7b) im zentralen Laufstreifenbereich (Z) jeweils mit einer Anzahl von zumindest im Wesentlichen in Laufstreifenquerrichtung verlaufenden Einschnitten (11, 12) mit einer Breite von 0,4 mm bis 0,6 mm versehen sind, wobei der zentrale Laufstreifenbereich (Z) zwischen 45 % und 55 % der Breite (B) des Laufstreifens einnimmt und im zentralen Laufstreifenbereich (Z) ausschließlich gerade verlaufende Einschnitte (12) angeordnet sind, und wobei die Einschnitte (11) in den Schulterblöcken (3) zumindest abschnittsweise einen in Draufsicht zickzack- oder wellenförmigen Verlauf aufweisen,
**dadurch gekennzeichnet,**
**dass** die Schulterblöcke (3) jeweils durch eine parallel zu den Quernuten (4) verlaufende Querrille (9), welche eine geringere Tiefe als die Quernuten (4) aufweist und in die Umfangrille (1) einmündet, in Schulterblockteile zweigeteilt sind, wobei in jedem Schulterblockteil ein Einschnitt (11) oder zwei Einschnitte (11) parallel zur Querrille (9) verlaufend angeordnet ist bzw. sind.

2. Fahrzeugluftreifen nach Anspruch 1, **dadurch gekennzeichnet, dass** die Einschnitte (11) in den Schulterblöcken (3) jeweils einen wellen- oder zickzackförmigen Abschnitt (11b) aufweisen, welcher zwischen zwei gerade verlaufenden Einschnittabschnitten (11a) angeordnet ist.

3. Fahrzeugluftreifen nach Anspruch 1, **dadurch gekennzeichnet, dass** die gerade verlaufenden Einschnitte (12) im zentralen Laufstreifenbereich (Z) des Laufstreifens unter einem Winkel (ϕ) von 90° bis 120° zur Umfangsrichtung und, falls dieser Winkel 90° übersteigt, zu den Diagonalrillen (5) gegensinnig geneigt verlaufen.

4. Fahrzeugluftreifen nach Anspruch 1 oder 2, **dadurch gekennzeichnet, dass** in einem Schulterblockteil mit einem Einschnitt (11) dieser Einschnitt (11) zur Schulterblockkante, welche eine Quernut (4) begrenzt, einen Abstand (a₁) aufweist, welcher größer ist als der Abstand (a₂) zu jener Kante, welche die Querrille (9) begrenzt.

5. Fahrzeugluftreifen nach Anspruch 1 oder 2, **dadurch gekennzeichnet, dass** in einem Schulterblockteil mit zwei Einschnitten (11) jener Einschnitt (11), der zur Schulterblockkante benachbart verläuft, welche eine Quernut (4) begrenzt, einen Abstand (a₁') aufweist, welcher größer ist als der Abstand (a₂') zwischen dem zweiten Einschnitt (11) und der Kante, welche die Querrille (9) begrenzt.

## Claims

1. Pneumatic vehicle tyre, in particular for use in winter driving conditions, with a tread strip comprising rows of profile blocks (2) on the shoulder side, which have shoulder blocks (3) separated from one another by transverse grooves (4) and are respectively separated by a circumferential channel (1), running around in the circumferential direction, from a central tread strip region (Z), in which profile positives (7a, 7b) are formed by diagonal channels (5), the shoulder blocks (3) and the profile positives (7a, 7b) in the central tread strip region (Z) being respectively provided with a number of sipes (11, 12) that run at least substantially in the transverse direction of the tread strip and have a width of 0.4 mm to 0.6 mm, the central tread strip region (Z) taking up between 45% and 55% of the width (B) of the tread strip, and exclusively straight-running sipes (12) being arranged in the central tread strip region (Z), and the sipes (11) in the shoulder blocks (3) having at least in certain portions a profile that is of a zigzagging or wavy form in plan view, **characterized in that** the shoulder blocks (3) are respectively divided in two by a transverse channel (9), which runs parallel to the transverse grooves (4), has a smaller depth than the transverse grooves (4) and opens into the circumferential channel (1), in each shoulder block part one sipe (11) or two sipes (11) being arranged as running parallel to the transverse channel (9).

2. Pneumatic vehicle tyre according to Claim 1, **characterized in that** the sipes (11) in the shoulder blocks (3) respectively have a portion (11b) of a wavy or zigzagging form, which is arranged between two straight-running sipe portions (11a).

3. Pneumatic vehicle tyre according to Claim 1, **characterized in that** the straight-running sipes (12) in the central tread strip region (Z) of the tread strip run at an angle (ϕ) of 90° to 120° in relation to the circumferential direction and, if this angle exceeds 90°, oppositely inclined in relation to the diagonal channels (5).

4. Pneumatic vehicle tyre according to Claim 1 or 2, **characterized in that**, in a shoulder block part with one sipe (11), this sipe (11) is at a distance (a₁) from the shoulder block edge that bounds a transverse groove (4) which is greater than the distance (a₂) from the edge that bounds the transverse channel (9).

5. Pneumatic vehicle tyre according to Claim 1 or 2, **characterized in that**, in a shoulder block part with two sipes (11), the sipe (11) that runs adjacent to the shoulder block edge which bounds a transverse groove (4) is at a distance (a₁') which is greater than the distance (a₂') between the second sipe (11) and the edge that bounds the transverse channel (9).

## Revendications

1. Pneu de véhicule, en particulier pour l'utilisation dans des conditions de conduite hivernales, comprenant une bande de roulement avec des rangées de blocs profilés (2) du côté de l'épaule, présentant des blocs d'épaule (3) séparés les uns des autres par des rainures transversales (4), lesquelles rangées de blocs profilés sont à chaque fois séparées par une gorge périphérique (1) dans la direction périphérique d'une région de bande de roulement centrale (Z), dans laquelle sont formés des profilés positifs (7a, 7b) de gorges diagonales (5), les blocs d'épaule (3) et les profilés positifs (7a, 7b) étant pourvus dans la région de bande de roulement centrale (Z) à chaque fois d'une pluralité d'entailles (11, 12) s'étendant au moins essentiellement dans la direction transversale de la bande de roulement, ayant une largeur de 0,4 mm à 0,6 mm, la région de bande de roulement centrale (Z) constituant entre 45 % et 55 % de la largeur (B) de la bande de roulement et des entailles (12) s'étendant exclusivement en ligne droite étant disposées dans la région de bande de roulement centrale (Z), et les entailles (11) dans les blocs d'épaule (3) présentant au moins en partie une allure en zigzag ou ondulée en vue de dessus, **caractérisé en ce que** les blocs d'épaule (3) sont divisés en deux en parties de blocs d'épaule à chaque fois par une gorge transversale (9) s'étendant parallèlement aux rainures transversales (4), laquelle présente une plus faible profondeur que les rainures transversales (4) et débouche dans la gorge périphérique (1), une entaille (11) ou deux entailles (11) étant disposée (s) dans chaque partie de bloc d'épaule de manière à s'étendre parallèlement à la gorge transversale (9).

2. Pneu de véhicule selon la revendication 1, **caractérisé en ce que** les entailles (11) dans les blocs d'épaule (3) présentent à chaque fois une section ondulée ou en zigzag (11b) qui est disposée entre deux sections d'entailles (11a) s'étendant en ligne droite.

3. Pneu de véhicule selon la revendication 1, **caractérisé en ce que** les entailles s'étendant en ligne droite (12) dans la région de bande de roulement centrale (Z) de la bande de roulement s'étendent de manière inclinée suivant un angle (ϕ) de 90° à 120° par rapport à la direction périphérique, et si cet angle dépasse 90°, en sens inverse par rapport aux gorges diagonales (5).

4. Pneu de véhicule selon la revendication 1 ou 2, **caractérisé en ce que** dans une partie de bloc d'épaule comprenant une entaille (11), cette entaille (11) présente, par rapport à une arête de bloc d'épaule qui délimite une rainure transversale (4), une distance (a₁) qui est supérieure à la distance (a₂) à l'arête respective qui délimite la gorge transversale (9).

5. Pneu de véhicule selon la revendication 1 ou 2, **caractérisé en ce que** dans une partie de bloc d'épaule avec deux entailles (11), l'entaille (11) qui s'étend à proximité de l'arête de bloc d'épaule qui délimite une rainure transversale (4) présente une distance (a₁') qui est supérieure à la distance (a₂') entre la deuxième entaille (11) et l'arête qui délimite la gorge transversale (9).
